# EUROPÄISCHE PATENTANMELDUNG

(11) **EP 1 508 846 A2**
(43) Veröffentlichungstag der Anmeldung: **23.02.2005**
(21) Anmeldenummer: 04019388.0
(22) Anmeldetag: 16.08.2004
(51) Int. Cl.: G05D 16/06

(54) **Konstantdruckventil und Verfahren zum Absperren eines Volumenstromes durch ein solches Konstantdruckventil**

(30) Priorität: 16.08.2003 DE 10337689
(71) Anmelder: Schulz, Dieter, 59302 Oelde (DE)
(72) Erfinder: Schulz, Dieter, 59302 Oelde (DE)
(74) Vertreter: Dantz, Jan Henning

(57) **Zusammenfassung**

Ein Konstantdruckventil (1), insbesondere zum Anschluss an Separatoren mit Kolbenschiebern und Schälscheiben, umfasst einen Einlass (2) für ein durchströmendes Fluid durch einen Innenraum (6) und einen durch mindestens einen Ventilkegel (4) verschließbaren Auslass (3), wobei der mindestens eine Ventilkegel (4) über eine Kolbenstange (5) bewegbar ist, die mit mindestens einem Membranelement (9, 15) verbunden ist, das eine Wand einer mit Druck beaufschlagbaren ersten Kammer (10, 14) ausbildet, und mittels der ersten Kammer (10,14) den mindestens einen Ventilkegel (4) in eine geschlossene Position bewegbar ist. Erfindungsgemäß ist zumindest eine zweite mit Druck beaufschlagbare Kammer (11) vorgesehen, mittels der der mindestens eine Ventilkegel (4) in die geöffnete Position bewegbar ist. Dadurch kann mit einer Regelung des Druckes in den Kammern (10, 11, 14) die Bewegung des Ventilkegels (4) geregelt werden, um Druckschläge zu vermeiden.

## Beschreibung

Die vorliegende Erfindung betrifft ein Konstantdruckventil, insbesondere zum Anschluss an Separatoren mit Kolbenschiebem und Schälscheiben, mit einem Einlass für ein durchströmendes Fluid durch einen Innenraum und einem durch mindestens einen Ventilkegel verschließbaren Auslass, wobei der mindestens eine Ventilkegel über eine Kolbenstange bewegbar ist, die mit mindestens einem Membranelement verbunden ist, das eine Wand einer mit Druck beaufschlagbaren ersten Kammer ausbildet, und mittels der ersten Kammer den mindestens einen Ventilkegel in eine geschlossene Position bewegbar ist, und ein Verfahren zum Absperren eines Volumenstromes durch ein solches Konstantdruckventil.

Es gibt Konstantdruckventile, bei denen ein Membranelement an den Strömungsraum angeschlossen ist, das mit einer Kolbenstange zum Öffnen und Verschließen eines Ventils gekoppelt ist. Das Membranelement ist auf der zu dem durchströmten Raum abgewandten Seite als Wand einer Kammer ausgebildet, die mit Druck beaufschlagbar ist. Beim Erhöhen des Druckes in der Kammer wird die Kolbenstange mit dem Ventil über das Membranelement bewegt und in die verschlossene Position verstellt. Beim Absenken des Druckes überwiegt der Druck in dem durchströmten Raum und das Ventil öffnet sich wieder. Beim Durchströmen des Konstantdruckventils mit relativ hohen Volumenströmen besteht allerdings das Problem, dass beim Verschließen des Ventils ein schlagartiger Abriss der Flüssigkeitssäule vorgenommen wird. Daraus entwickeln sich Flüssigkeitsschläge, die so groß sind, dass Leitungen platzen können, Halterungen der Leitungen abreißen und sehr laute Geräusche entstehen. Gerade bei großen Leitungslängen und vielen Widerständen in den Leitungen steigt die Gefahr von Flüssigkeitsschlägen mit schwerwiegenden Folgen. Je länger die Leitung, desto größer die strömende Masse, die zu bewältigen ist und damit steigen die Kräfte, die die Flüssigkeitsschläge auslösen beim plötzlichen Abreißen des Flüssigkeitsstromes.

Aus der DE 200 06 105 ist ein Membranventil bekannt, bei dem ein an einer Kolbenstange gelagerter Ventilkegel über die Erhöhung des Druckes auf einer Seite einer Membran verschließbar ist. Die Kolbenstange ist dabei aus einem Ventilgehäuse zu einem Druckverstärker herausgeführt, der als zylindrisches Gehäuse mit einem darin abgedichtet geführten Kolbenelement ausgebildet ist. Das Kolbenelement kann auf einer Seite mit Druck beaufschlagt werden um die Schließbewegung des Ventilkegels zu beschleunigen. Das Auftreten von Flüssigkeitsschlägen beim Schließen des Ventils kann mit der gezeigten Konstruktion jedoch nicht vermieden werden.

Es ist daher Aufgabe der vorliegenden Erfindung ein Konstantdruckventil und ein Verfahren zum Absperren eines Volumenstromes durch ein Konstantdruckventil zu schaffen, das die negativen Folgen von Flüssigkeitsschlägen vermeidet und ein geregeltes Öffnen und Schließen des Ventils vornehmen kann.

Diese Aufgabe wird mit einem Konstantdruckventil mit den Merkmalen des Anspruches 1 und mit einem Verfahren mit den Merkmalen des Anspruches 12 gelöst. gelöst.

Erfindungsgemäß ist zumindest eine zweite mit Druck beaufschlagbare Kammer vorgesehen, mittels der mindestens ein Ventilkegel in die geöffnete Position bewegbar ist und die Zuleitung und Ableitung eines Fluides in die zweite Kammer regelbar ist. Dadurch lässt sich die Schließgeschwindigkeit des Ventilkegels regeln, indem mittels des Druckes in der zweiten Kammer und vorzugsweise einem mit der Kolbenstange verbundenen Membranelement ein schlagartiges Schließen des Ventilkegels vermieden wird und eine geregelte Schließbewegung mit dem Ventilkegel durchführbar ist. Durch eine einstellbare Verzögerung der Schließgeschwindigkeit wird die Fließgeschwindigkeit der abfließenden Flüssigkeitssäule zunächst verringert und erst dann gestoppt, sodass kein plötzliches Abreißen des Flüssigkeitsstromes erfolgt.

Gemäß einer bevorzugten Ausführungsform der Erfindung ist das Membranelement eine Trennwand zwischen der ersten Kammer und der zweiten Kammer. Dann lässt sich die Regeleinheit für die Bewegung des Ventilkegels kompakt aufbauen, wobei das Membranelement unmittelbar über den Druck in den beiden Kammern bewegbar ist. Für einen kompakten Aufbau kann die Kolbenstange dabei durch die zweite Kammer hindurchtreten.

Zum Regeln der Schließgeschwindigkeit ist vorzugsweise die Zuleitung und Ableitung eines Fluides in die zweite Kammer einstell- und/oder regelbar, beispielsweise über eine entsprechende Steuerung, die mit der übrigen Maschine, wie einer Zentrifuge verbunden ist. Dabei kann mittels einer Regelung des Druckes in den Kammern dann die Schließgeschwindigkeit des Ventilkegels eingestellt werden.

Für einen einfachen Aufbau des Konstantdruckventils sind die erste Kammer und die zweite Kammer in einem Aufsatz angeordnet, der an einem Gehäuse des Konstantdruckventils montiert ist. Das Konstantdruckventil kann somit modulartig aufgebaut sein, also bei Bedarf ohne entsprechende Regelung für die Schließgeschwindigkeit des Ventils ausgeliefert werden, wobei bei Montage des Aufsatzes eine solche Regelung erfolgen kann.

Vorzugsweise ist eine dritte mit Druck beaufschlagbare Kammer vorgesehen, mittels der der Ventilkegel in die geschlossene Position bewegbar ist. Diese dritte Kammer kann beispielsweise innerhalb des Gehäuses des Konstantdruckventils als Trennwand zu dem mit Fluid durchströmten Raum ausgebildet sein. Für eine einfache Steuerung des Druckes in den Kammern können die erste und dritte Kammer miteinander verbunden sein.

Vorzugsweise ist der Innenraum die dem Separator mit Kolbenschiebern und Schälscheiben zugeordnete Druckkammer. Der Bereich zwischen Schälscheibe(n) und Konstantdruckventil ist der Bereich in dem der Druck konstant gehalten werden soll. Bei jeder Entleerung des Separators mit Kolbenschieber und Schälscheiben bricht vorgenannter Druck zusammen und der Ventilkegel schließt den Auslass sofort, so dass es zu den unerwünschten Druckschlägen kommt.

Erfindungsgemäß wird auch ein Verfahren zum Absperren eines Volumenstromes durch ein Konstantdruckventil bereitgestellt, bei dem die Schließgeschwindigkeit des Ventilkegels so verzögert wird, dass die Flüssigkeitssäule am Auslass keinen Unterdruck, insbesondere auch keine Kavitation hinter dem Ventilkegel erzeugt.

Vorzugsweise wird die Schließgeschwindigkeit des Ventilkegels um mehr als 0,2 sek., beispielsweise 0,5 bis 0,8 sek. nach Erhalt eines Schließbefehls verzögert, um langsamer als bei den Schließsystemen nach dem Stand der Technik zu schließen. Die Geschwindigkeit des Ventilkegels kann dabei so geregelt werden, dass die Verzögerung der Fließgeschwindigkeit des Fluids in den Einlass angepasst ist. Beispielsweise kann die Schließgeschwindigkeit kleiner als z.B. < 25% der Rohrleitungsfließgeschwindigkeit sein.

Die Erfindung wird nachfolgend anhand eines Ausführungsbeispieles mit Bezug auf die beigefügte Zeichnung näher erläutert. Es zeigt:

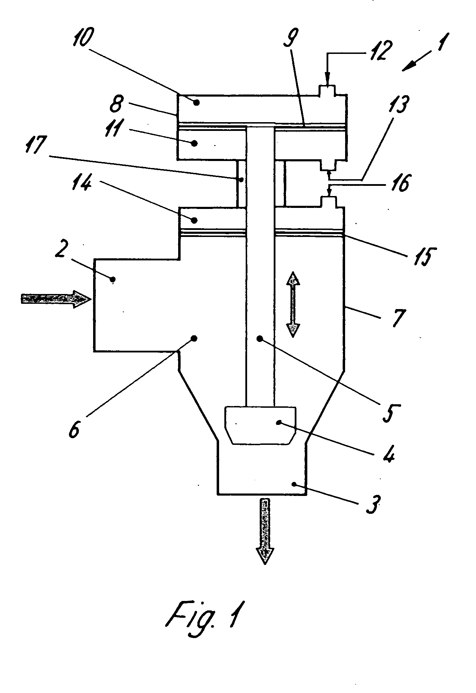

- Figur 1: eine schematische Ansicht eines Ausführungsbeispieles eines Erfindungsgemäßen Konstantdruckventils.

Ein Konstantdruckventil 1 umfasst einen Einlass 2, in den ein Fluid einströmt. Zur Anpassung des Durchmessers des Einlasses 2 ist es möglich, ein Adapterelement am Einlass 2 zu montieren. Ferner ist in einem rechten Winkel zu dem Einlass 2 ein Auslass 3 vorgesehen, durch den das Fluid abströmen kann. Der Auslass 3 ist über ein Ventilkegel 4 verschließbar, das an einer Kolbenstange 5 montiert ist. In dem Konstantruckventil 1 ist ein durchströmter Raum 6 ausgebildet, der von einem Gehäuse 7 umschlossen ist.

Zum Steuern der Bewegung des Ventilkegels 4 ist die Kolbenstange 5 mit einem Membranelement 9 verbunden, das in einem Aufsatz 8 aufgenommen ist. Oberhalb des Membranelementes 9 ist eine erste mit Druck beaufschlagbare Kammer 10 ausgebildet, deren Innendruck über einen Anschluss 12 steuerbar ist. Unterhalb des Membranelements ist eine zweite Kammer 11 vorgesehen, die über einen Anschluss 13 mit Druck beaufschlagbar ist. Das Membranelement 9 bildet somit eine Trennwand zwischen erster Kammer 10 und zweiter Kammer 11 aus, sodass abhängig vom Druck in den beiden Kammern 10 und 11 das Membranelement 9 beweglich ist und somit die Kolbenstange 5 und der Ventilkegel 4 in ihren Bewegungen steuerbar sind.

In dem Gehäuse 7 ist ein zweites Membranelement 15 mit der Kolbenstange 5 gekoppelt, und oberhalb des Membranelementes 15 ist eine dritte mit Druck beaufschlagbare Kammer14 ausgebildet. Die Kammer 14 ist über einen Anschluss 16 mit einem Fluid versorgbar, wobei der Anschluss 16 mit dem Anschluss 12 verbunden ist.

Zwischen dem Gehäuse 7 und dem Aufsatz 8 ist eine abgedichtete Durchführung 17 vorgesehen, durch die die Kolbenstange 5 hindurchtritt. Das Konstantdruckventil 1 ist somit modulartig ausgebildet und kann bei Bedarf auch ohne den Aufsatz 8 geliefert werden.

Wenn das Konstantdruckventil 1 von einem Fluid durchströmt wird, kann in einem Betriebszustand in dem Innenraum 6 beispielsweise ein Druck von 3 bar herrschen. In den Kammern 10, 11 und 14 kann ebenfalls ein Druck von etwa 3 bar eingestellt werden, sodass die Membranelemente 9 und 15 im Gleichgewicht sind, d.h. bei konstantem Druck bleibt der Ventilkegel 4 in der vorbestimmten geöffneten Position. Wenn der Ventilkegel 4 verschlossen werden soll, wird über die Regelung des Druckes an den Anschlüssen 12, 13 und 16 die Schließbewegung des Ventils 4 geregelt. Gerade bei hohen Volumenströmen ist es wichtig, dass der Ventilkegel 4 langsam verschließt und somit ein Abreißen der Flüssigkeitssäule vermieden wird, da dies zu unerwünschten Druckschlägen führt.

In dem dargestellten Ausführungsbeispiel wird an den Anschlüssen 12, 13 und 16 Druckluft zugeführt, um eine Bewegung des Ventilkegels 4 zu steuern. Es ist auch möglich, statt Druckluft andere pneumatische oder hydraulische Einrichtungen vorzusehen.

Die dargestellten Membranelemente 9 und 15 sind mehrlagig ausgeführt, wobei die einzelnen Lagen eine Abdichtung bereitstellen und eine gewisse Flexibilität aufweisen. Dadurch kann das Membranelement am Außenumfang am Aufsatz 8 oder am Gehäuse 7 mechanisch festgelegt, beispielsweise festgeklemmt sein. Es ist natürlich auch möglich, statt eines flexiblen Membranelementes starre Membranelemente vorzusehen, die mittels einer Gleitführung in dem Aufsatz 8 und dem Gehäuse 7 bewegbar sind.

Der dargestellte Ventilkegel 4 ist nur schematisch gezeigt und es sind verschiedene Formen einsetzbar, um den Auslass 3 zu verschließen. Es können auch mehrere Ventilkegel 4 zum Verschließen des Auslasses 3 eingesetzt werden. Dann besteht der Auslass 3 aus mehreren Teilauslässen, die voneinander getrennt angeordnet sein können, wobei die Teilauslässe jeweils von einem Ventilkegel verschlossen werden können. Sofern in der Anmeldung nur von "Ventilkegel" und nicht von mindestens einem Ventilkegel gesprochen wird, sollen immer auch Ausführungsformen mit mehreren Ventilkegeln und entsprechend mehreren Teilauslässen erfasst sein.

Das bevorzugte Anwendungsgebiet des Konstantdruckventils ist der Einsatz an Zentrifugen und Separatoren, wobei das Konstantdruckventil 1 in einem Leitungssystem zwischen Zentrifuge und einem Aufnahmebehälter angeordnet ist. Es ist natürlich auch möglich, das Konstantdruckventil 1 in anderen Leitungssystemen einzusetzen.

## Patentansprüche

1. Konstantdruckventil (1), insbesondere zum Anschluss an Separatoren mit Kolbenschiebern und Schälscheiben, mit einem Einlass (2) für ein durchströmendes Fluid durch einen Innenraum (6) und einem durch mindestens einen Ventilkegel (4) verschließbaren Auslass (3), wobei der mindestens eine Ventilkegel (4) über eine Kolbenstange (5) bewegbar ist, die mit mindestens einem Membranelement (9, 15) verbunden ist, das eine Wand einer mit Druck beaufschlagbaren ersten Kammer (10, 14) ausbildet, und mittels der ersten Kammer (10,14) den mindestens einen Ventilkegel (4) in eine geschlossene Position bewegbar ist, **dadurch gekennzeichnet, dass** zumindest eine zweite mit Druck beaufschlagbare Kammer (11) vorgesehen ist, mittels der der mindestens eine Ventilkegel (4) in die geöffnete Position bewegbar ist.

2. Konstantdruckventil nach Anspruch 1, **dadurch gekennzeichnet, dass** das Membranelement (9) eine Trennwand zwischen der ersten Kammer (10) und der zweiten Kammer (11) ausbildet.

3. Konstantdruckventil nach Anspruch 1 oder 2, **dadurch gekennzeichnet, dass** die Kolbenstange (5) durch die zweite Kammer (11) hindurchtritt.

4. Konstantdruckventil nach einem der Ansprüche 1 bis 3, **dadurch gekennzeichnet, dass** die Zuleitung und Ableitung eines Fluides in die zweite Kammer (11) einstellbar oder regelbar ist.

5. Konstantdruckventil nach einem der Ansprüche 1 bis 4, **dadurch gekennzeichnet, dass** mittels einer Regelung des Druckes in den Kammern (10, 11, 14) die Schließgeschwindigkeit des Ventilkegels (4) einstellbar ist.

6. Konstantdruckventil nach einem der Ansprüche 1 bis 5, **dadurch gekennzeichnet, dass** die erste Kammer (10) und die zweite Kammer (11) in einem Aufsatz angeordnet sind, der an einem Gehäuse (7) des Konstantdruckventils (1) montiert ist.

7. Konstantdruckventil nach einem der Ansprüche 1 bis 6, **dadurch gekennzeichnet, dass** eine dritte mit Druck beaufschlagbare Kammer (14) vorgesehen ist, mittels der der Ventilkegel in die geschlossene Position bewegbar ist.

8. Konstantdruckventil nach Anspruch 7, **dadurch gekennzeichnet, dass** die dritte Kammer (14) mit der ersten Kammer (10) verbunden ist.

9. Konstantdruckventil nach einem der Ansprüche 1 bis 8, **dadurch gekennzeichnet, dass** der Einlass (2) von einer oder mehreren Schälscheiben mit Fluid beschickt wird.

10. Konstantdruckventil nach einem der Ansprüche 1 bis 9, **dadurch gekennzeichnet, dass** der Innenraum (6) die dem Separator zugeordnete Druckkammer ist.

11. Konstantdruckventil nach einem der Ansprüche 1 bis 10, **dadurch gekennzeichnet, dass** die Flussrichtung des Fluids durch den Auslass (3) in Richtung der Schließrichtung des Ventilkegels (4) ist.

12. Verfahren zum Absperren eines Volumenstromes durch ein Konstantdruckventil nach einem der vorhergehenden Ansprüche, **dadurch gekennzeichnet, dass** die Schließgeschwindigkeit des Ventilkegels (4) so verzögert wird, dass die Flüssigkeitssäule am Auslass (3) keinen Unterdruck hinter dem Ventilkegel (4) erzeugt.

13. Verfahren nach Anspruch 13, **dadurch gekennzeichnet, dass** die Schließgeschwindigkeit des Ventilkegels (4) um mehr als 0,2 sek., beispielsweise 0,5 bis 0,8 sek. nach Erhalt eines Schließbefehls verzögert schließt.
